# FASCICULE DE BREVET EUROPEEN

(11) **EP 0 858 429 B1**
(45) Date de publication et mention de la délivrance du brevet: **08.03.2006**
(21) Numéro de dépôt: 96937380.2
(22) Date de dépôt: 31.10.1996
(51) Int. Cl.: C01D 7/00, C01D 7/18, B01D 53/68, B01D 53/50

(54) **COMPOSITION COMPRENANT AU MOINS DU BICARBONATE DE SODIUM, SON PROCEDE D'OBTENTION ET SES UTILISATIONS**
ZUSAMMENSETZUNG DIE MINDESTENS NATRIUMBICARBONAT ENTHÄLT, VERFAHREN ZU DEREN HERSTELLUNG UND DEREN VERWENDUNGEN
COMPOSITION CONTAINING AT LEAST SODIUM BICARBONATE, PREPARATION METHOD THEREFOR AND USES THEREOF

(30) Priorité: 31.10.1995 FR 9512973
(43) Date de publication de la demande: 19.08.1998
(60) Demande divisionnaire: 06000985.9
(73) Titulaire: Novacarb, 92408 Courbevoie Cédex (FR)
(72) Inventeur: FOURCOT, Fabrice, F-78140 Vélizy (FR); POUXVIEL, Jean-Claude, F-78480 Verneuil-sur-Seine (FR); ZING, Christophe, F-92150 Suresnes (FR)
(74) Mandataire: Jacobson, Claude
(86) Numéro de dépôt international: PCT/FR1996/001720
(87) Numéro de publication internationale: WO 1997/016377

(56) Documents cités:
- EP-A- 0 005 301
- EP-A- 0 015 626
- WO-A-95/19835
- FR-A- 1 178 417
- GB-A- 2 106 489
- US-A- 4 385 039
- DATABASE WPI Section Ch, Week 9333 Derwent Publications Ltd., London, GB; Class D16, AN 93-261949 XP002024876 & JP 05 179 299 A (LION CORP) , 20 Juillet 1993
- PATENT ABSTRACTS OF JAPAN vol. 015, no. 282 (C-0850), 17 Juillet 1991 & JP 03 098540 A (NISSHIN FLOUR MILLING CO LTD), 24 Avril 1991,

## Description

La présente invention a pour objet une nouvelle composition comprenant au moins du bicarbonate de sodium, son procédé d'obtention ainsi que ses utilisations notamment dans le traitement de fumées, dans le domaine de la détergence, et en alimentation animale.

Le traitement de fumées comprenant toutes sortes de polluants, comme les acides minéraux, tels que les acides de formule HX dans laquelle X représente un halogène, les composés du type des SOₓ, des NOₓ, les dérivés organiques, comme les dioxines, les furannes, par exemple, ainsi que des métaux considérés comme toxiques, connaît un essor particulier du fait de la pression croissante de la réglementation pour l'environnement exercée sur les sociétés émettant de tels rejets gazeux.

Parmi les procédés générateurs de tels gaz, on peut entre autres citer les incinérateurs d'ordures ménagères, les incinérateurs de déchets hospitaliers et de déchets industriels spéciaux, les centrales thermiques, les fours de type verrier mais aussi certaines productions de l'industrie chimique.

Les installations classiques de traitement des gaz mettent en oeuvre des traitements dits par voie sèche, ou par voie semi-humide. Dans le premier cas, l'agent neutralisant les fumées est introduit sous la forme d'un solide, et dans le second cas, ledit agent est employé sous la forme d'une suspension ou d'une solution aqueuse, dont la quantité d'eau est calculée de telle sorte que le produit issu du traitement est un solide, comme dans le premier cas.

L'un des plus anciens procédés de type sec utilise la chaux comme réactif, ce qui impose un rapport stoechiométrique important du fait de la faible réactivité de la chaux.

Ces procédés présentent en outre l'inconvénient de créer des résidus solides qui sont très difficilement revalorisables et qui doivent être mis en décharge spéciale, du fait de la présence des métaux considérés comme toxiques. Les quantités de solides dans ce cas, sont relativement importantes et occasionnent des surcoûts élevés pour le procédé.

Un procédé plus intéressant consiste à utiliser du bicarbonate de sodium. L'emploi de cet agent neutralisant permet de disposer d'un résidu solide qui est lui, facilement recyclable. Par ailleurs, la quantité molaire de bicarbonate de sodium, par rapport aux composés à neutraliser présents dans les gaz à traiter est beaucoup plus faible que dans le cas de la chaux.

Dans la demande internationale WO 95/19835, on a proposé de mettre en oeuvre un mélange présentant une granulométrie particulière et comprenant au moins 98 % de bicarbonate de sodium et moins de 2 % de carbonate de sodium dans l'épuration de fumées résiduaires de l'incinération des ordures ménagères.

Ces derniers types de procédé, mettant en oeuvre du bicarbonate de sodium, constituent une avance technologique dans le domaine. Cependant, il reste important de diminuer le coût de tels traitements et de pouvoir utiliser un produit facilement disponible, avec une teneur suffisante en bicarbonate de sodium et dépourvu d'impuretés gênantes.

Les utilisations de bicarbonate de sodium dans des compositions détergentes, notamment en tant que builder alcalin (JP 5179299) ainsi que dans des compositions pour l'alimentation d'animaux, en tant qu'agent d'expansion (JP 03098540) sont aussi connues.

Dans le brevet français FR 1 178 417, est décrit un procédé de préparation de carbonate de sodium par fusion et décomposition thermique, au moyen d'un chauffage par induction, de bicarbonate de sodium brut. Ledit bicarbonate de sodium brut est obtenu par le procédé de la soude à l'ammoniaque, et comprend du bicarbonate de sodium, du carbonate de sodium, du bicarbonate d'ammonium et de l'eau. Cependant, ce produit, obtenu par simple filtration, ne présente pas une structure appropriée.

La présente invention a pour objet une nouvelle composition, comprenant au moins du bicarbonate de sodium, destinée au traitement de fumées issues d'incinération d'ordures ménagères, de déchets hospitaliers ou de déchets industriels spéciaux, ou encore de fumées issues de centrales thermiques ou de fours verriers mais également au domaine de la détergence et en alimentation animale.

Elle concerne également un procédé simple d'obtention de ladite composition.

Ainsi, un premier objet de l'invention est une nouvelle composition caractérisée en ce qu'elle comprend au moins 80 % en poids de bicarbonate de sodium, moins de 20 % en poids de carbonate de sodium, de 0,2 à 0,7 % en poids d'ammoniac, exprimé en ions ammonium, en ce qu'elle peut comprendre de l'eau à une teneur inférieure à 10 % en poids, et en ce qu'elle est susceptible d'être obtenue selon le procédé décrit ci-dessous comme préparation constituant le second objet de l'invention.

Le second objet de l'invention est constitué par la préparation d'une composition comprenant au moins 80% en poids de bicarbonate de sodium, moins de 20% en poids de carbonate de sodium, 0,2 à 0,7% en poids d'ammoniac sous forme d'ions ammonium, et moins de 10% en poids d'eau, caractérisée en ce que l'on effectue un traitement thermique d'un bicarbonate ammoniacal, à une température comprise entre 20 et 150°C dans le but de sécher et de décomposer sélectivement les sels d'ammonium présents.

Une variante préférée de l'invention consiste à effectuer le traitement thermique sous une atmosphère contrôlée pouvant comprendre de l'eau et/ou du dioxyde de carbone.

Par ailleurs, un troisième objet de la présente invention concerne le traitement de fumées comprenant principalement des acides du type HX avec X représentant un halogène, ou principalement des composés du type des SOx, ces composés étant seuls ou en mélange, ainsi que des métaux considérés comme toxiques, traitement dans lequel le bicarbonate issu du procédé selon l'invention est utilisé en tant que réactif.

Mais d'autres caractéristiques et avantages de la présente invention apparaîtront plus clairement à la lecture de la description et des exemples qui vont suivre.

Avant de décrire plus en détails le procédé selon l'invention, il convient de préciser que le bicarbonate ammoniacal traité thermiquement est le produit intermédiaire obtenu en mettant en oeuvre le procédé de préparation de carbonate de sodium par la technique de la soude à l'ammoniaque, connue aussi sous le nom de "procédé Solvay".

Plus précisément, on appelle bicarbonate ammoniacal aux fins de la présente invention, le produit obtenu après dissolution d'ammoniac gazeux dans une solution aqueuse de chlorure de sodium de manière à produire une saumure ammoniacale. Celle-ci est ensuite traitée avec un gaz contenant du dioxyde de carbone pour donner des cristaux de bicarbonate ammoniacal.

Le bicarbonate ammoniacal désigne en fait une composition comprenant principalement du bicarbonate de sodium, du carbonate de sodium, et dans une moindre mesure, de l'ammoniac sous forme de sels ammonium tels que bicarbonate, carbonate et/ou carbamate, et de l'eau.

A titre indicatif, cette composition comprend : 70 à 90 % en poids de bicarbonate de sodium (NaHCO₃), 2 à 20 % en poids de carbonate de sodium (Na₂CO₃), 0,2 à 1,0 % en poids d'ammoniac exprimé sous forme d'ion ammonium, 0,3 à 2,0 % en poids de carbamate d'ammonium (NH₄O₂CNH₂), et 5 à 20 % en poids d'eau.

Contrairement à ce qui était attendu, le traitement du bicarbonate ammoniacal dans la gamme de température spécifiée, et plus particulièrement à température élevée, et sous une atmosphère contrôlée en eau et/ou en dioxyde de carbone, permet de sécher et de décomposer sélectivement les sels d'ammonium présents tels que bicarbonate, carbonate et/ou carbamate, en ammoniac et en dioxyde de carbone, sans décomposition substantielle du bicarbonate de sodium présent dans le mélange en carbonate de sodium.

En effet, il ne faut pas oublier que la dernière étape du procédé Solvay consiste à calciner à une température de l'ordre de 200°C le bicarbonate ammoniacal pour donner du carbonate de sodium. En conséquence, il n'était pas évident qu'un traitement thermique à des températures pouvant être aussi élevées que 120°C-130°C aurait permis d'atteindre un tel résultat.

Comme cela a été indiqué auparavant, le traitement thermique selon l'invention est effectué à une température comprise entre 20 et 150°C, de préférence sous une atmosphère contrôlée pouvant comprendre de l'eau et/ou du dioxyde de carbone.

Selon un mode de réalisation préféré de l'invention, le traitement thermique peut avoir lieu à une température comprise entre 20 et 130°C.

Plus particulièrement, le traitement thermique est effectué en présence d'une atmosphère dont la teneur en vapeur d'eau est comprise entre 0 et 10 % molaire.

En ce qui concerne le dioxyde de carbone, le traitement thermique est effectué en présence d'une atmosphère dont la teneur en dioxyde de carbone est comprise entre 0 et 100 % molaire.

Par ailleurs, le traitement thermique selon l'invention est effectué sous une atmosphère pouvant comprendre de l'air, ou tout autre gaz inerte tel que les gaz rares, l'azote. La teneur en ce type de gaz, s'il est utilisé, assure le complément pour atteindre la pression totale souhaitée.

Selon un mode de réalisation préféré de l'invention, le traitement thermique est mis en oeuvre en présence de vapeur d'eau et de dioxyde de carbone.

On a constaté que la température de traitement du bicarbonate ammoniacal pouvait être adaptée en fonction de la quantité de vapeur d'eau et de dioxyde de carbone présents.

Ainsi, dans le cas où l'atmosphère est un mélange azote/oxygène ou air, la gamme de température pour le traitement thermique sera de préférence inférieure à 80°C.

Par ailleurs, si le traitement est mis en oeuvre sous une atmosphère comprenant un mélange de dioxyde de carbone et de vapeur d'eau, et éventuellement de l'air ou un gaz inerte, il est alors envisageable d'effectuer ce dernier à une température proche de 120°C-130°C, bien que des températures plus faibles restent possibles.

Pour ce qui précède, les valeurs des températures sont exprimées à la pression atmosphérique. L'homme du métier est capable d'adapter les valeurs des températures en fonction de la pression sous laquelle est réalisé le traitement.

En effet, la préparation de la composition selon l'invention peut être effectuée sous toute pression.

Le traitement selon l'invention est de préférence réalisé sous un flux gazeux. Une raison à ceci est qu'il est hautement souhaitable de ne pas maintenir une pression partielle en ammoniac au dessus du bicarbonate ammoniacal, afin de favoriser la décomposition des sels d'ammonium tels que bicarbonate, carbonate et/ou carbamate.

Habituellement, la durée de l'opération est d'au plus quelques heures.

Le traitement thermique est plus particulièrement effectué sous agitation.

La nouvelle composition, obtenue selon le procédé de l'invention et qui constitue un autre objet de l'invention, peut comprendre au moins du bicarbonate de sodium, au moins du carbonate de sodium, et au moins de l'ammoniac sous forme de sels d'ammonium tels que bicarbonate, carbonate et/ou carbamate.

La teneur en bicarbonate de sodium est avantageusement d'au moins 70% en poids, de préférence d'au moins 80 %, et plus particulièrement comprise entre 80 et 95% en poids. La quantité en carbonate de sodium présent est avantageusement de moins de 30 % en poids, de préférence de moins de 20 %, et plus particulièrement comprise entre 5 et 15 % en poids. La quantité d'ammoniac exprimé sous forme d'ion ammonium présent est de préférence de moins de 1 % en poids et plus particulièrement varie entre 0,2 et 0,7 % en poids.

Cette composition peut comprendre, en outre, des sels carbamate et de l'eau. La teneur en carbamate d'ammonium est de préférence inférieure à 0,1 % en poids et plus préférentiellement comprise entre 0,01 et 0,06 % en poids. L'eau est présente de préférence en quantité inférieure à 10 % en poids et plus préférentiellement de 1 à 6 % en poids.

On ne sortira pas du cadre de l'invention, à mettre la composition de l'invention sous forme de solution et/ou de suspension aqueuse.

Généralement, la solution peut comprendre de 50 à 150 g/l de la composition. En ce qui concerne la suspension aqueuse, elle comprend de 10 à 50 % en poids de ladite composition.

Ladite composition peut donc être utilisée, et cela constitue un troisième objet de l'invention, pour le traitement de fumées comprenant principalement des acides de formules HX, avec X représentant un halogène, ou principalement des composés du type des SOₓ, ces composés étant seuls ou en mélange, ainsi que des métaux considérés comme toxiques.

Selon une première variante de l'invention, les fumées à traiter comprennent majoritairement des acides de formule HX, dans laquelle X représente un halogène, ainsi que des métaux considérés comme toxiques. Plus particulièrement, X représente le chlore. Lesdites fumées peuvent en outre contenir dans une moindre mesure, des composés du type des SOₓ.

Par métaux considérés comme toxiques on désigne plus particulièrement les métaux lourds et/ou les métaux polyvalents. A titre d'exemple, mais sans intention de se limiter, on peut citer le mercure, le cadmium, le plomb, l'arsenic, le sélénium, l'argent, l'antimoine, le zinc, l'aluminium, le silicium, le calcium, le titane, le chrome, le manganèse, le fer, le nickel, le cuivre, le molybdène, l'étain, le bismuth, le vanadium, le cobalt.

Les fumées de ce type sont plus particulièrement dues à l'incinération d'ordures ménagères, de déchets hospitaliers ou encore de déchets industriels spéciaux.

Selon une seconde variante de la présente invention, les fumées à traiter comprennent majoritairement des composés du type des SOₓ, ainsi que des métaux considérés comme toxiques. Par SOₓ, on entend notamment les composés du genre SO₂, SO₃. Ces fumées peuvent aussi comprendre, dans une proportion moindre, des sulfites ou encore des bisulfites, des acides de formules HX dans laquelle X représente un halogène.

Les fumées de ce type sont plus particulièrement rencontrées avec l'exploitation des centrales thermiques, des fours verriers, par exemple.

Il est par ailleurs à noter que de telles fumées, qu'elles correspondent à la première ou à la seconde variante, peuvent aussi comprendre des poussières et/ou des cendres volantes, ainsi que d'autres polluants comme les composés du type des NOₓ, ou encore des composés organiques, comme les dioxines ou les furannes.

Les fumées peuvent être traitées, de manière avantageuse, par la voie semi-humide ou par la voie sèche.

Par voie semi-humide, on définit un procédé dans lequel la composition issue du procédé selon l'invention (appelé aussi par la suite réactif) est introduite en présence d'eau dans une quantité telle que les produits obtenus après le traitement se trouvent sous une forme solide. Dans ce cas, le réactif est mis en oeuvre sous la forme d'une suspension ou d'une solution.

La teneur en eau nécessaire pour obtenir une solution ou une suspension du réactif peut être déterminée par l'homme du métier en fonction des contraintes technologiques du procédé. Plus particulièrement, cette teneur dépend de la température de traitement des fumées, de la capacité d'évaporation des appareillages et du fait que l'on souhaite obtenir, après ledit traitement, un produit solide.

Par voie sèche, on désigne plus particulièrement un traitement dans lequel le réactif est introduit à l'état solide dans les fumées.

Dans ce cas, on peut distinguer deux types de mise en oeuvre, la première variante est effectuée sans apport d'eau supplémentaire, et la seconde variante est effectuée en apportant de l'eau mais avec une quantité telle que le réactif conserve son aspect de poudre.

Dans ce dernier cas, la teneur en eau est comprise entre 2 et 15 % en poids par rapport au réactif. De préférence, la quantité d'eau est comprise entre 5 et 10%.

Il est préférable d'utiliser un réactif, qui se présente sous forme solide, de granulométrie fine et contrôlée de façon à améliorer la cinétique du traitement de neutralisation.

Par exemple, on préfère utiliser un réactif dont la taille moyenne des particules est inférieure à 50 µm. Selon un mode de réalisation plus particulier, on utilise un réactif dont la granulométrie moyenne est comprise entre 5 et 30 µm.

Si l'on met en oeuvre un réactif de granulométrie supérieure ou de l'ordre de 50 µm, il peut être avantageux d'effectuer préalablement au traitement des fumées, une étape de broyage dudit réactif pour atteindre une granulométrie de l'ordre de 5 à 30 µm. Une telle étape peut être mise en oeuvre par tout moyen classique connu de l'homme du métier.

Si l'on met en oeuvre la variante avec un apport extemporané d'eau, cette dernière peut être apportée avant le traitement des fumées ou bien encore, lors du traitement de ces fumées.

Ainsi, on peut mettre en contact l'eau sous forme pulvérisée et le réactif, dans un tambour humidificateur, si l'apport d'eau a lieu avant le traitement des fumées proprement dit.

Dans le cas où l'on apporte l'eau lors de la mise en contact du réactif avec les fumées, on injecte celle-ci dans les quantités requises, directement dans la veine gazeuse.

Bien entendu, la combinaison de ces possibilités est envisageable.

La quantité de réactif mis en oeuvre dans le procédé de traitement des fumées selon l'invention dépend de la quantité de composés présents à neutraliser.

Selon un mode de réalisation particulier de l'invention, on effectue le traitement des fumées de telle sorte que le rapport stoechiométrique entre le réactif et les composés du type des SOₓ soit compris entre 1,02 et 2 et/ou le rapport stoechiométrique entre le réactif et les composés du type des acides de formule HX soit compris entre 1,02 et 2.

De préférence, ledit rapport stoechiométrique est compris entre 1,02 et 1,5. Selon un mode de réalisation avantageux, le rapport stoechiométrique est compris entre 1,05 et 1,3.

Si les fumées à traiter comprennent des polluants organiques, il peut être avantageux d'injecter dans la veine gazeuse un adsorbant, avec le réactif et éventuellement l'eau. L'adsorbant comprenant les polluants organiques peut être ensuite récupéré avec les solides issus du traitement des fumées.

Il est à noter que ce traitement permet aussi d'augmenter la quantité de mercure récupéré s'il est présent dans les fumées.

L'adsorbant est en général du charbon actif et/ou du coke de lignite.

En outre, si les fumées comprennent des poussières ou des cendres volantes, celles-ci peuvent être récupérées avec les solides produits lors de la neutralisation, ou bien préalablement au traitement selon l'invention, par des méthodes classiques.

La mise en contact desdites fumées avec le réactif, éventuellement l'eau et l'adsorbant, est effectuée de manière connue.

Ainsi, elle peut avoir lieu à co-courant ou à contre-courant.

Le traitement peut de même être effectué dans tout type de réacteur favorisant la dispersion du solide, de la suspension ou de la solution dans les fumées, comme les réacteurs comprenant des systèmes de type Venturi, ou les réacteurs à lit fluidisé.

Les solides produits par le procédé de traitement des fumées sont ensuite séparés en mettant en oeuvre des techniques classiques telles que les électrofiltres, ou les filtres à manche.

Selon un mode de réalisation avantageux de la présente invention, au moins une partie des solides issus du traitement des fumées est recyclée vers une nouvelle étape de traitement des fumées.

La température de traitement des fumées dépend de diverses contraintes technologiques.

Elle dépend notamment de la température des fumées à traiter, de la teneur en eau, de la présence d'un traitement catalytique des NOₓ ultérieur, de la résistance thermique des appareillages.

A titre d'indication, la température de traitement des fumées est comprise entre 70 et 500°C et plus particulièrement entre 130 et 400°C.

Dans le cas où l'on effectue un traitement par voie sèche en présence d'eau apportée extemporanément, on peut recycler lesdits solides dans la zone de préparation du mélange réactif/eau.

Si l'eau est mise en contact dans la zone de neutralisation, les solides sont introduits dans cette zone, séparément ou avec, l'introduction de réactif frais.

Ce mode de réalisation avec recyclage est intéressant pour augmenter encore l'efficacité du procédé, notamment en cas de temps de séjour court dans la zone de neutralisation. Ce mode permet de même d'abaisser les seuils de purification des fumées.

Les solides issus du procédé selon l'invention présentent l'avantage d'être valorisables.

Ainsi, les solides issus du traitement des fumées sont purifiés en mettant en oeuvre une première étape de dissolution dans l'eau, suivie d'une étape de séparation des métaux considérés comme toxiques qu'ils contiennent.

Dans le cas plus particulier où les fumées comprennent majoritairement des acides de formule HX, et plus particulièrement l'acide chlorhydrique, les solides résultants du procédé selon l'invention sont à base d'halogénures de sodium tel que le chlorure de sodium, outre les métaux considérés comme toxiques.

Dans ce cas, les solides sont mis en contact avec de l'eau, ce qui a pour effet de solubiliser les halogénures de sodium présents ainsi que certains des métaux considérés toxiques présents. On procède ensuite à une première étape de séparation des matières restées insolubles, en général par filtration.

Les métaux considérés comme toxiques qui ont été solubilisés sont à leur tour séparés de la solution aqueuse de chlorure de sodium à purifier. Plus particulièrement, on met en oeuvre une ou plusieurs étapes de précipitation.

Le contrôle de la valeur du pH est effectué en ajoutant soit un acide, soit une base. Pour des raisons évidentes visant à ne pas polluer le mélange, l'acide et la base sont choisis en fonction des ions qu'ils apportent. C'est pourquoi, on préfère utiliser de l'acide chlorhydrique comme acide, et de l'hydroxyde de sodium, du carbonate ou du bicarbonate de sodium en tant que bases. Les précipités des métaux considérés comme toxiques sont ensuite éliminés par filtration notamment.

Selon une variante particulière et dans le cas où la solution comprend des sulfates, obtenus par la neutralisation des SOₓ lors du traitement des fumées ainsi éventuellement que du fluorure de sodium, on peut ajouter un agent de précipitation des composés, tels que le chlorure de calcium. Ensuite on effectue une séparation du gypse et du fluorure de calcium qui ont précipité. Cette étape de séparation peut avoir lieu en même temps que celle du précipité contenant les métaux considérés comme toxiques.

Dans le cas où un degré de pureté de la solution aqueuse de chlorure de sodium est souhaité, on peut procéder à une ou plusieurs étapes de purification supplémentaires.

Une première variante consiste à mettre en contact ladite solution aqueuse avec une ou plusieurs résines échangeuses d'ions. Les résines peuvent être sous forme hydrogène ou sodium, avec toutefois une préférence pour le second type de résines qui permet une extraction optimale des ions des métaux considérés comme toxiques présents dans la solution.

Une autre variante possible a trait à l'emploi d'agents tels que les sulfures minéraux ou les composés soufrés organiques. Parmi les sulfures minéraux, on peut citer les sulfures de sodium, de fer ou encore de baryum. A titre d'exemple de composés soufrés organiques, on peut citer plus particulièrement le sel trisodique de la trimercapto-S-triazine, en solution à 15 % dans l'eau (TMT 15®).

Une troisième variante consisterait en la combinaison de ces possibilités.

Les solutions aqueuses de chlorure de sodium, dont les degrés de pureté peuvent être adaptés, sont valorisables dans divers procédés industriels. Ainsi, ces solutions peuvent entrer dans la synthèse de carbonate ou de bicarbonate de sodium (procédé Solvay), ou encore dans la préparation de solutions d'hydroxyde de sodium par électrolyse.

Dans le cas où les fumées sont plutôt à base de composés du type des SOₓ, les résidus obtenus, à base de sulfate de sodium principalement et comprenant de même des métaux considérés comme toxiques, peuvent aussi être de façon avantageuse valorisés après purification.

Une première étape consiste là encore à mettre en contact les résidus solides avec de l'eau ou une solution aqueuse recyclée comprenant du sulfate de sodium.

Le but de cette seconde étape est d'une part de dissoudre de manière sélective les sulfates, le cas échéant les sels halogénés, qui sont le plus souvent des chlorures. D'autre part, l'objectif de cette étape est de laisser en suspension la majeure partie des métaux considérés comme toxiques.

Une telle opération de dissolution sélective est effectuée en contrôlant le pH du milieu pour se trouver dans une gamme de solubilité minimale des métaux, qui sont notamment sous forme d'hydroxyde et/ou de carbonates.

Il est clair que la gamme dépend de la nature des métaux présents et un compromis entre chacun d'eux peut être nécessaire.

En règle générale, la dissolution est effectuée dans une gamme de pH comprise entre 3 et 10, ces deux bornes étant comprises.

Selon une première variante, et si l'aluminium n'est pas présent en quantité élevée par rapport aux autres métaux, une gamme de pH se situant entre 7 et 10, les deux bornes étant comprises, représente un bon compromis. Plus particulièrement on peut effectuer la dissolution dans une gamme de pH comprise entre 7 et 9, ces deux bornes étant comprises.

Selon une deuxième variante et dans le cas où la quantité d'aluminium est élevée, il peut être souhaitable d'opérer la dissolution à un pH compris entre 3 et 7, ces deux bornes étant comprises.

On ne sortirait pas du cadre de la présente invention en mettant en oeuvre les deux variantes précitées successivement. Ainsi, l'étape de dissolution peut correspondre à deux étapes successives avec une étape de séparation intermédiaire, l'une effectuée à un pH compris entre 7 et 10, la seconde à un pH compris entre 3 et 7, l'ordre dépendant de la valeur du pH de la solution initiale.

Le contrôle de la valeur du pH est effectué en ajoutant soit un acide, soit une base, choisis de manière à ne pas polluer le mélange. Ainsi, on préfère utiliser de l'acide sulfurique ou du carbonate ou du bicarbonate de sodium.

L'étape de dissolution sélective des sulfates est effectuée, selon un mode de réalisation particulier de l'invention, à une température comprise entre 15 et 80°C, plus particulièrement entre 20 et 60°C. Un mode de réalisation avantageux consiste à réaliser cette dissolution à une température voisine de 30-40°C.

Après la dissolution et dans le cas ou les fumées traitées contiennent des sulfites ou des bisulfites, on peut effectuer une oxydation de ces espèces en sulfates. Cette opération est en général réalisée en ajoutant au moins un composé oxydant dans le mélange, éventuellement en combinaison avec un chauffage de ce dernier. A titre d'exemple de composés oxydants, on peut citer l'air, le peroxyde d'hydrogène, les persulfates ou encore le sel de l'acide de Caro.

Une fois le sulfate de sodium dissous, on sépare la solution des solides qu'elle contient, par filtration, ou tout autre méthode classique.

Les résidus solides peuvent alors être mis en décharge. On constate qu'à ce stade, la quantité de résidus à mettre en décharge a considérablement diminué par rapport aux procédés classiques de neutralisation à la chaux, et ce, en mettant en oeuvre un procédé simple.

Le filtrat, correspondant à une solution aqueuse de sulfate de sodium purifiée, est par la suite traité de façon à cristalliser ledit sulfate.

Cette opération peut être mise en oeuvre par tout moyen connu de l'homme du métier.

Selon une première variante, on refroidit le filtrat jusqu'à obtenir une différence de température de 15 à 20°C entre les températures de dissolution et de cristallisation.

Dans ce cas, les cristaux obtenus sont sous forme décahydratée.

Selon une seconde variante, on cristallise le sulfate de sodium par évaporation d'au moins une partie de l'eau de la solution.

Les cristaux résultants se trouvent sous forme anhydre.

Le liquide résultant de la cristallisation peut être avantageusement recyclé à l'étape de dissolution des solides issus de l'étape de traitement des fumées.

Avant le recyclage, il peut être intéressant de prélever une partie de ce liquide afin d'éviter l'enrichissement des liquides en métaux considérés comme toxiques, ou éventuellement de traiter ce liquide.

Bien qu'une telle étape ne soit qu'optionnelle, on peut là encore procéder, avant la cristallisation du sulfate de sodium, à une purification supplémentaire de la solution, de manière à éliminer les métaux considérés comme toxiques restant éventuellement en solution.

Une première méthode consiste à ajouter à la solution au moins un agent précipitant adéquat, choisi notamment parmi les hydroxydes de métaux alcalins, le carbonate de sodium, le carbonate de sodium, ou encore les silicates, ces agents précipitants pouvant être utilisés seuls ou en mélange.

A titre d'agents de ce type, on peut aussi mentionner les produits commercialisés sous la dénomination Profix®, Max Flow®, Low Ash®.

Une seconde méthode, consiste à mettre en contact la solution avec au moins un sulfure minéral, au moins un composé soufré organique, ou leur mélange. Ce qui a été indiqué pour la variante où les fumées à traiter contiennent plus particulièrement des acides de formule HX reste valable et ne sera donc pas repris ici.

Une troisième méthode convenable consiste à mettre en contact la solution avec une résine échangeuse d'ions. On pourra se référer, comme précédemment à ce qui a été décrit pour la purification supplémentaire des solutions issues du traitement de fumées comprenant principalement des acides de formule HX.

La pureté de ces cristaux est telle qu'ils peuvent être valorisables directement ou après séchage ou granulation.

Le sulfate de sodium peut notamment être revalorisé dans les fours verriers par exemple.

La composition selon l'invention, peut également être utilisée comme constituent de base, comme builder, dans les détergents et dans l'alimentation animale.

Dans le cas de la détergence, les propriétés de porosité obtenues selon le procédé de l'invention peuvent être améliorées, par rapport à celles du bicarbonate commercial, et permettre d'augmenter la quantité de produits organiques à absorber, tels que les composés tensioactifs non ioniques par exemple.

La composition selon l'invention contient également de l'ammoniac sous forme d'ion ammonium. Ce produit permet d'associer à cette composition, une source d'azote pour l'élaboration des acides aminés chez les animaux.

Des exemples concrets mais non limitatifs de l'invention vont maintenant être présentés.

### EXEMPLE 1

On effectue le traitement sous air à 30°C, de 50 g de bicarbonate ammoniacal comprenant 74,1 % en poids de bicarbonate de sodium, 9 % en poids de carbonate de sodium, 1 % en poids de carbamate d'ammonium, 1 à 2 % en poids de bicarbonate et de carbonate d'ammonium, le reste étant de l'eau, avec une quantité négligeable de chlorure de sodium.

On chauffe le bicarbonate ammoniacal dans un réacteur en verre muni d'une double enveloppe thermostatée à 30°C. Le réacteur est ouvert et balayé par une atmosphère d'air.

Le tableau ci-dessous résume les résultats obtenus.

| **durée (heures)** | **perte de masse (% poids)** | **NH**_{**3**} **total * (% poids)** |
|---|---|---|
| 1 | 5,4 | 0,7 |
| 2 | 10,1 | 0,6 |

| | | |
|---|---|---|
| *: NH₃ total (% en poids) exprimé sous forme d'ion ammonium | | |

La valeur relative à l'ammoniac total présent, exprimé sous forme de teneur en ion ammonium, correspond à la totalité des composés ammoniacaux susceptibles de libérer de l'ammoniac.

Après deux heures, on constate que la valeur de l'ammoniac total ne varie plus de manière substantielle, même après un traitement d'une dizaine d'heures.

Le produit final, c'est-à-dire après deux heures de traitement, comprend 83,7 % en poids de bicarbonate de sodium, 10 % en poids de carbonate de sodium, le complément à 100 % étant constitué par de l'eau, avec une quantité négligeable de chlorure de sodium.

### EXEMPLE 2

Le traitement du même bicarbonate ammoniacal que pour l'exemple 1 est effectué dans un réacteur en verre comprenant une double enveloppe thermostatée.

L'atmosphère sous laquelle est réalisé le traitement thermique est la suivante (Pression totale = 1 bar absolu) :
- pression partielle d'eau : 2 % molaire,
- pression partielle de dioxyde de carbone : 98 % molaire.

La température est augmentée constamment et l'on analyse la nature des composés qui se dégagent.

On constate qu'à partir de 25°C, les espèces ammoniaquées se décomposent et l'eau se dégage.

Par contre, jusqu'à une température de 113°C, le bicarbonate de sodium ne se décompose pas.

Cet exemple démontre donc que sous une atmosphère contrôlée en eau et en dioxyde de carbone, on peut éliminer les espèces ammoniaquées sans décomposer le bicarbonate de sodium présent.

### EXEMPLE 3

On effectue le traitement thermique d'un bicarbonate ammoniacal de composition identique à celle de l'exemple 1, dans un four dont l'atmosphère est contrôlée pour avoir la composition suivante (Pression totale = 1 bar absolu) :
- pression partielle d'eau : 2% molaire,
- pression partielle de dioxyde de carbone : 98 % molaire.

La température est augmentée de 0,5°C/mn jusqu'à atteindre une température de 80°C. La température est alors maintenue à cette valeur pendant une durée de 6 heures et demie.

On obtient un mélange de composition suivante :
- 88,2 % en poids de bicarbonate de sodium,
- 8,7 % en poids de carbonate de sodium,
- 0,4 % en poids d'espèces ammoniaquées (exprimées en ion ammonium),
- qsp 100% en poids d'eau, avec une quantité négligeable de chlorure de sodium.

## Revendications

1. Procédé de préparation d'une composition comprenant au moins 80% en poids de bicarbonate de sodium, moins de 20% en poids de carbonate de sodium, 0,2 à 0,7% en poids d'ammoniac sous forme d'ions ammonium, et moins de 10% en poids d'eau, **caractérisé en ce que** l'on effectue un traitement thermique d'un bicarbonate ammoniacal, à une température comprise entre 20 et 150°C dans le but de sécher et de décomposer sélectivement les sels d'ammonium présents.

2. Procédé selon la revendication 1, **caractérisé en ce que** le traitement thermique est effectué sous une atmosphère contrôlée pouvant comprendre de l'eau et/ou du dioxyde de carbone.

3. Procédé selon l'une des revendications 1 ou 2, **caractérisé en ce que** le bicarbonate ammoniacal, issu de la réaction d'ammoniac gazeux dissous dans une solution aqueuse de chlorure de sodium et de dioxyde de carbone, est une composition comprenant du bicarbonate de sodium, du carbonate de sodium, de l'ammoniac sous forme de sels d'ammonium tels que bicarbonate, carbonate et/ou carbamate, et de l'eau.

4. Procédé selon la revendication 3, **caractérisé en ce que** le bicarbonate ammoniacal comprend 70 à 90 % en poids de bicarbonate de sodium, 2 à 20 % en poids de carbonate de sodium, 0,2 à 1,0 % en poids d'ammoniac exprimé en ion ammonium, 0,3 à 2,0 % en poids de carbamate d'ammonium, et 5 à 20 % en poids d'eau.

5. Procédé selon l'une des revendications 1 à 4, **caractérisé en ce que** l'on effectue le traitement thermique à une température comprise entre 20 et 130°C.

6. Procédé selon l'une des revendications 1 à 5, **caractérisé en ce que** l'on effectue le traitement thermique en présence d'une atmosphère dont la teneur en vapeur d'eau est comprise entre 0 et 10 % molaire.

7. Procédé selon l'une des revendications 1 à 6, **caractérisé en ce que** l'on effectue le traitement thermique en présence d'une atmosphère dont la teneur en dioxyde de carbone est comprise entre 0 et 100 % molaire.

8. Procédé selon l'une des revendications 1 à 7, **caractérisé en ce que** l'on effectue le traitement thermique sous une atmosphère pouvant comprendre de l'air, ou tout autre gaz inerte tel que les gaz rares, l'azote.

9. Procédé selon l'une des revendications 1 à 8, **caractérisé en ce que** l'on effectue le traitement thermique en présence d'eau et de dioxyde de carbone.

10. Composition **caractérisée en ce qu'**elle comprend au moins 80 % en poids de bicarbonate de sodium, moins de 20 % en poids de carbonate de sodium, de 0,2 à 0,7 % en poids d'ammoniac, exprimé en ions ammonium, **en ce qu'**elle peut comprendre de l'eau à une teneur inférieure à 10 % en poids, et **en ce qu'**elle est susceptible d'être obtenue selon le procédé décrit dans l'une des revendications 1 à 9.

11. Composition selon la revendication 10, **caractérisée en ce qu'**elle peut comprendre un carbamate d'ammonium à une teneur inférieure à 0,1 % en poids.

12. Composition selon l'une des revendications 10 ou 11, **caractérisée en ce qu'**elle comprend 80 à 95 % en poids de bicarbonate de sodium, 5 à 15 % en poids de carbonate de sodium.

13. Utilisation de la composition selon l'une des revendications 10 à 12, dans le traitement de fumées **caractérisée en ce que**lles comprennent principalement des acides du type HX avec X représentant un halogène, ou principalement des composés du type des SOₓ, ces composés étant seuls ou en mélange, ainsi que des métaux considérés comme toxiques, ou d'autres polluants comme des composés du type des NOx.

14. Utilisation selon la revendication 13 dans le traitement de fumées, **caractérisée en ce que** l'on traite lesdites fumées par la voie semi-humide.

15. Utilisation selon la revendication 13, **caractérisée en ce que** l'on traite lesdites fumées par la voie sèche sans apport d'eau supplémentaire.

16. Utilisation selon la revendication 13, **caractérisée en ce que** l'on traite lesdites fumées par la voie sèche en apportant extemporanément de l'eau en quantité telle que la composition conserve son aspect de poudre.

17. Utilisation selon la revendication précédente, **caractérisée en ce que** la teneur en eau apportée est comprise entre 2 et 15 % en poids par rapport à la composition, de préférence, entre 5 et 10%.

18. Utilisation selon l'une quelconque des revendications 13, ou 15 à 17, **caractérisée en ce que** l'on apporte extemporanément l'eau lors du traitement des fumées ou avant celui-ci, ou leur combinaison.

19. Utilisation selon l'une quelconque des revendications précédentes **caractérisée en ce que** la taille moyenne des particules de la composition est inférieure à 50 µm, de préférence comprise entre 5 et 30 µm.

20. Utilisation selon l'une quelconque des revendication 13 à 19 dans le traitement de fumées, **caractérisée en ce que** le rapport stoechiométrique entre le réactif et les composés du type des SOₓ est compris entre 1,02 et 2 et/ou le rapport stoechiométrique entre le réactif et les composés du type des acides de formule HX est compris entre 1,02 et 2.

21. Utilisation selon la revendication 20 dans le traitement de fumées, **caractérisée en ce que** les solides issus du traitement des fumées sont purifiés en mettant en oeuvre une première étape de dissolution dans l'eau, suivie d'une étape de séparation des métaux considérés comme toxiques qu'ils contiennent.

22. Utilisation de la composition selon l'une des revendications 10 à 12, comme constituant de base, comme builder, pour compositions détergentes.

23. Utilisation de la composition selon l'une des revendications 10 à 12, comme constituant de base dans l'alimentation animale.

## Claims

1. Method of preparing a composition comprising at least 80% by weight sodium bicarbonate, less than 20% by weight sodium carbonate, 0.2 to 0.7 % by weight ammonia in the form of ammonium ions, and less than 10% by weight water, **characterised in that** heat treatment of an ammoniacal bicarbonate is carried out, at a temperature between 20°C and 150°C for the purpose of selectively drying and decomposing the ammonium salts present.

2. Method according to Claim 1, **characterised in that** the heat treatment is carried out under a controlled atmosphere which may comprise water and/or carbon dioxide.

3. Method according to one of Claims 1 or 2, **characterised in that** the ammoniacal bicarbonate, issuing from the gaseous ammonia reaction, dissolved in an aqueous solution of sodium chloride and carbon dioxide, is a composition comprising sodium bicarbonate, sodium carbonate, ammonia in the form of ammonium salts such as bicarbonate, carbonate and/or carbamate, and water.

4. Method according to Claim 3, **characterised in that** the ammoniacal bicarbonate comprises 70% to 90% by weight sodium bicarbonate, 2% to 20% by weight sodium carbonate, 0.2% to 1.0% by weight ammonia expressed as ammonium ion, 0.3% to 2.0% by weight ammonium carbamate, and 5% to 25% by weight water.

5. Method according to one of Claims 1 to 4, **characterised in that** the heat treatment is carried out at a temperature between 20°C and 130°C.

6. Method according to one of Claims 1 to 5, **characterised in that** the heat treatment is carried out in the presence of an atmosphere whose water vapour content is between 0% and 10% molar.

7. Method according to one of Claims 1 to 6, **characterised in that** the heat treatment is carried out in the presence of an atmosphere whose carbon dioxide content is between 0% and 100% molar.

8. Method according to one of Claims 1 to 7, **characterised in that** the heat treatment is carried out in an atmosphere which can comprise air, or any other inert gas such as rare gases or nitrogen.

9. Method according to one of Claims 1 to 8, **characterised in that** the heat treatment is carried out in the presence of water and carbon dioxide.

10. Composition **characterised in that** it comprises at least 80% by weight sodium bicarbonate, less than 20% by weight sodium carbonate, 0.2 to 0.7% by weight ammonia, expressed as ammonium ions, **in that** it can comprise water at a content of less than 10% by weight, and **in that** it is able to be obtained according to the method described in one of Claims 1 to 9.

11. Composition according to Claim 10, **characterised in that** it can comprise an ammonium carbamate at a content of less than 0.1% by weight.

12. Composition according to one of Claims 10 or 11, **characterised in that** it comprises 80% to 90% by weight sodium bicarbonate and 5% to 15% by weight sodium carbonate.

13. Use of the composition according to one of Claims 10 to 12 in the treatment of fumes **characterised in that** they comprise principally acids of the HX type with X representing a halogen, or principally compounds of the Sox type, these compounds being alone or in a mixture, as well as metals considered to be toxic, or other pollutants such as compounds of the NOx type.

14. Use according to Claim 13 in the treatment of fumes, **characterised in that** the said fumes are treated by the semi-wet method.

15. Use according to Claim 13, **characterised in that** the said fumes are treated by the dry method without the addition of any extra water.

16. Use according to Claim 13, **characterised in that** the said fumes are treated by the dry method by extemporaneously adding water in a quantity such that the composition keeps its appearance of powder.

17. Use according to the preceding claim, **characterised in that** the water content added is between 2% and 15% by weight with respect to the composition, preferably between 5% and 10%.

18. Use according to any one of Claims 13, or 15 to 17, **characterised in that** the water is added extemporaneously during the treatment of the fumes or before this, or a combination thereof.

19. Use according to any of the preceding claims, **characterised in that** the average size of the particles of the composition is less than 50 µm, preferably between 5 µm and 30 µm.

20. Use according to any of Claims 13 to 19 in the treatment of fumes, **characterised in that** the stoichiometric ratio between the reagent and the compounds of the SOx type is between 1.02 and 2 and/or the stoichiometric ratio between the reagent and the compounds of the acids of formula HX is between 1.02 and 2.

21. Use according to Claim 20 in the treatment of fumes, **characterised in that** the solids issuing from the treatment of the fumes are purified using a first step of dissolving in water, followed by a step of separating the metals considered to be toxic which they contain.

22. Use of the composition according to one of Claims 10 to 12, as a basic constituent, as a builder, for detergent compositions.

23. Use of the composition according to one of Claims 10 to 12, as a basic constituent in animal feed.

## Patentansprüche

1. Verfahren zur Herstellung einer Zusammensetzung, die mindestens 80 Gew.-% Natriumhydrogencarbonat, weniger als 20 Gew.-% Natriumcarbonat, 0,2 bis 0,7 Gew.-% Ammoniak in Form von Ammoniumionen und weniger als 10 Gew.-% Wasser umfasst, **dadurch gekennzeichnet, dass** eine Wärmebehandlung eines ammoniakalischen Hydrogencarbonats bei einer Temperatur von 20 bis 150 °C mit dem Ziel durchgeführt wird, die vorhandenen Ammoniumsalze zu trocknen und selektiv abzubauen.

2. Verfahren nach Anspruch 1, **dadurch gekennzeichnet, dass** die Wärmebehandlung in einer kontrollierten Atmosphäre durchgeführt wird, die Wasser und/oder Kohlendioxid enthalten kann.

3. Verfahren nach Anspruch 1 oder 2, **dadurch gekennzeichnet, dass** das ammoniakalische Hydrogencarbonat, das sich durch die Umsetzung von gasförmigem Ammoniak, der in einer wäßrigen Natriumchloridlösung gelöst ist, mit Kohlendioxid gebildet hat, eine Zusammensetzung ist, die Natriumhydrogencarbonat, Natriumcarbonat, Ammoniak in Form von Ammoniumsalzen wie Hydrogencarbonat, Carbonat und/oder Carbamat und Wasser umfasst.

4. Verfahren nach Anspruch 3, **dadurch gekennzeichnet, dass** das ammoniakalische Hydrogencarbonat 70 bis 90 Gew.-% Natriumhydrogencarbonat, 2 bis 20 Gew.-% Natriumcarbonat, 0,2 bis 1,0 Gew.-% Ammoniak, angegeben als Ammoniumion, 0,3 bis 2,0 Gew.-% Ammoniumcarbamat und 5 bis 20 Gew.-% Wasser umfasst.

5. Verfahren nach einem der Ansprüche 1 bis 4, **dadurch gekennzeichnet, dass** die Wärmebehandlung bei einer Temperatur von 20 bis 130 °C durchgeführt wird.

6. Verfahren nach einem der Ansprüche 1 bis 5, **dadurch gekennzeichnet, dass** die Wärmebehandlung in Gegenwart einer Atmosphäre durchgeführt wird, deren Wasserdampfgehalt 0 bis 10 Mol-% beträgt.

7. Verfahren nach einem der Ansprüche 1 bis 6, **dadurch gekennzeichnet, dass** die Wärmebehandlung in Gegenwart einer Atmosphäre durchgeführt wird, deren Kohlendioxidgehalt 0 bis 100 Mol-% beträgt.

8. Verfahren nach einem der Ansprüche 1 bis 7, **dadurch gekennzeichnet, dass** die Wärmebehandlung in einer Atmosphäre durchgeführt wird, die Luft oder ein beliebiges anderes inertes Gas wie ein Edelgas und Stickstoff enthalten kann.

9. Verfahren nach einem der Ansprüche 1 bis 8, **dadurch gekennzeichnet, dass** die Wärmebehandlung in Gegenwart von Wasser und Kohlendioxid durchgeführt wird.

10. Zusammensetzung, **dadurch gekennzeichnet, dass** sie mindestens 80 Gew.-% Natriumhydrogencarbonat, weniger als 20 Gew.-% Natriumcarbonat und 0,2 bis 0,7 Gew.-% Ammoniak, angegeben als Ammoniumionen, umfasst, dass sie Wasser mit einem Gehalt von unter 10 Gew.-% enthalten kann, und dass sie gemäß dem in einem der Ansprüche 1 bis 9 beschriebenen Verfahren hergestellt werden kann.

11. Zusammensetzung nach Anspruch 10, **dadurch gekennzeichnet, dass** sie ein Ammoniumcarbamat mit einem Gehalt von unter 0,1 Gew.-% enthalten kann.

12. Zusammensetzung nach Anspruch 10 oder 11, **dadurch gekennzeichnet, dass** sie 80 bis 95 Gew.-% Natriumhydrogencarbonat und 5 bis 15 Gew.-% Natriumcarbonat umfasst.

13. Verwendung der Zusammensetzung nach einem der Ansprüche 10 bis 12 zur Behandlung von Abgasen, **dadurch gekennzeichnet, dass** diese hauptsächlich Säuren vom Typ HX, wobei X ein Halogenatom bedeutet, oder hauptsächlich Verbindungen vom Typ SOx, wobei diese Verbindungen einzeln oder im Gemisch vorliegen, sowie als toxisch geltende Metalle oder andere Schadstoffe wie Verbindungen vom Typ NOx umfassen.

14. Verwendung nach Anspruch 13 zur Behandlung von Abgasen, **dadurch gekennzeichnet, dass** diese auf halbnassem Wege behandelt werden.

15. Verwendung nach Anspruch 13, **dadurch gekennzeichnet, dass** die Abgase auf trockenem Wege ohne Zufuhr von zusätzlichem Wasser behandelt werden.

16. Verwendung nach Anspruch 13, **dadurch gekennzeichnet, dass** die Abgase auf trockenem Wege behandelt werden, indem zusätzliches Wasser in einer solchen Menge zugeführt wird, dass die Zusammensetzung ihr pulverförmiges Aussehen behält.

17. Verwendung nach dem vorhergehenden Anspruch, **dadurch gekennzeichnet, dass** der Anteil an zugeführtem Wasser 2 bis 15 Gew.-% und vorzugsweise zwischen 5 und 10 Gew.-% der Zusammensetzung beträgt.

18. Verwendung nach einem der Ansprüche 13 oder 15 bis 17, **dadurch gekennzeichnet, dass** während der Behandlung der Abgase, davor oder zu beiden Zeiten zusätzliches Wasser zugeführt wird.

19. Verwendung nach einem der vorhergehenden Ansprüche, **dadurch gekennzeichnet, dass** die mittlere Größe der Teilchen der Zusammensetzung weniger als 50 µm und vorzugsweise 5 bis 30 µm beträgt.

20. Verwendung nach einem der Ansprüche 13 bis 19 zur Behandlung von Abgasen,**dadurch gekennzeichnet, dass** das stöchiometrische Verhältnis von Reaktionsmittel zu Verbindungen vom Typ SOx 1,02 bis 2 und/oder das stöchiometrische Verhältnis von Reaktionsmittel zu Verbindungen vom Typ Säuren mit der Formel HX 1,02 bis 2 beträgt.

21. Verwendung nach Anspruch 20 zur Behandlung von. Abgasen, **dadurch gekennzeichnet, dass** die durch die Behandlung der Abgase gebildeten Feststoffe gereinigt werden, indem eine erste Stufe der Auflösung in Wasser und anschließend eine Stufe der Abtrennung der als toxisch geltenden Metalle, die sie enthalten, durchgeführt wird.

22. Verwendung der Zusammensetzung nach einem der Ansprüche 10 bis 12 als ein Grundbestandteil bzw. Builder für Waschmittelzusammensetzungen.

23. Verwendung der Zusammensetzung nach einem der Ansprüche 10 bis 12 als ein Grundbestandteil in der Tierernährung.
